# EUROPEAN PATENT SPECIFICATION

(11) **EP 1 170 602 B1**
(45) Date of publication and mention of the grant of the patent: **18.01.2006**
(21) Application number: 00114611.7
(22) Date of filing: 07.07.2000
(51) Int. Cl.: G02B 5/08

(54) **Optical element comprising a superficial mirror coating and method for forming said coating**
Optisches Element mit einer Spiegel-Oberflächenbeschichtung und Verfahren zur Herstellung dieser Beschichtung
Elément optique à couche superficielle réfléchissante et méthode de fabrication de cette couche

(43) Date of publication of application: 09.01.2002
(73) Proprietor: Sola International Holdings Limited, Lonsdale South Australia 5160 (AU)
(72) Inventor: Macchi, Marco, 21049 Tradate (VA) (IT); Malnati, Sabrina, 21000 Vareses (VA) (IT)
(74) Representative: Bottero, Claudio

(56) References cited:
- EP-A- 0 456 488
- DE-A- 3 928 939
- GB-A- 2 268 509

## Description

### Field of invention

The present invention relates to an optical element comprising a transparent substrate provided with a superficial mirror coating, and to a method for forming said coating.

In the following description and in the appended claims, the expression "optical element" is used to indicate any substantially transparent element capable of allowing vision through the same, such as for example ophthalmic and non-ophthalmic lenses for glasses, visors, slabs, protective shields, etc.

In the following description and in the appended claims, the expression "transparent substrate" is used to indicate any transparent substrate, made of glass or of plastics, in particular of polycarbonate or diethylenglycol-bis-allyl-carbonate, commercially available as CR 39™ (PPG Industries Inc.), both commonly used for manufacturing ophthalmic and non-ophthalmic lenses for glasses.

### Prior art

As is known, in the field of optical elements and in particular of lenses for glasses, one of the most difficult problems to be solved is that of providing a superficial mirror coating exhibiting, at the same time, a suitable adhesion to the substrate, a good resistance to abrasion, a good reflectance, a low absorbance and, finally, an aesthetically pleasant color.

According to the teaching of the prior art, the desired characteristics of coloring and mirroring of the optical element are obtained by forming a coating including at least two layers of suitable materials on the transparent substrate of the optical element.

In the case of a mirror coating consisting of two layers only - which nowadays is the most widespread on the market due to its low-cost features - each layer has one or more specific functions.

The first layer, generally consisting of chromium or aluminium, in fact, exerts both the function of adhering the coating to the substrate and of evenly reflecting the light in the visible spectrum (400-700 nm).

The second layer, generally consisting of silicon oxide, exerts on the other hand both the function of imparting the desired color to the lens and of imparting a certain resistance to abrasion to the coating.

The technologies used for manufacturing these low-cost two-layered coatings are those of physical vapor deposition, or PVD, based on a thermal evaporation mechanism wherein the heating of the material to be evaporated is substantially carried out by Joule effect.

Although two-layered mirror coatings of the known type substantially meet the purpose and have a reasonable cost, nonetheless they possess the drawback of having properties of adhesion to the substrate and of resistance to abrasion which are not entirely satisfactory.

In the field of front surface mirrors, it was also disclosed by European patent application EP 0 456 488 to manufacture a monolithic front surface mirror comprising a substrate, a metal layer, a first dielectric layer and a second dielectric layer. In one preferred embodiment, a metal film is deposited onto a substrate and thereafter a low refractive index dielectric layer is deposited onto the metal layer followed by a high refractive index dielectric layer.

### Summary of the invention

Accordingly, the technical problem underlying the present invention is that of providing an optical element comprising a superficial mirror coating which would allow to achieve improved characteristics of adhesion to the substrate and of resistance to abrasion with respect to those of the two-layered coatings of the prior art currently on the market.

According to the present invention, it has been surprisingly found that the desired improvement of the characteristics of adhesion and of resistance to abrasion of the mirror coating may be achieved by realizing the coating with a new combination of layers of suitable materials.

Thus, according to a first aspect thereof, the present invention provides a substantially transparent optical element comprising a superficial mirror coating as defined in the attached claim 1.

In a preferred embodiment, the mirror coating of the invention comprises a sequence of three superimposed layers respectively consisting of a first material, which is mainly intended for carrying out the function of adhesion to the substrate; of a second material, which is mainly intended for carrying out the function of reflection, that is, of mirroring; and of a third material, which is mainly intended for carrying out the function of imparting to the coating the desired coloring and, optionally, the desired resistance to abrasion.

Advantageously, thanks to said combination of layers, it is also possible to obtain a wider range of colors and a greater variety of shades with respect to those obtainable with the conventional two-layered coatings.

The mirror-coated substrate of the invention is also easier to clean than the two-layered coatings of known type. Said advantageous feature may be attributed to the lower superficial roughness of the coating of the invention.

Advantageously, the mirroring layer of the present invention exhibits a greater transmittance with respect to that of two-layered coatings, which allows to coat dark substrates in a wider and more flexible way with respect to the prior art, while falling within the minimum transmittance limits possibly required by the applicable standards. This advantage is particularly appreciated in the case of lenses for sunglasses, since it is possible to widen the range of colors of the lens complying, at the same time, with the minimum transmittance limit of the coated lens, which limit is provided in the case of lenses to worn when driving motor vehicles, and is fixed to 8% by the standards EN 1836, ANSI Z80.3 and AS 1067.1.

Advantageously, the lower stiffness of the coating allows to achieve better properties of adhesion to the substrate, always with reference to those possessed by the two-layered coatings of comparable cost.

In a preferred embodiment, and as it will better appear hereinafter, the optical element of the invention may be manufactured at a reasonable cost using the equipment and the technology of vapor deposition used so far for forming the aforementioned two-layered coatings.

Preferably, the layer including the first material has a thickness comprised between 0.5 and 5 nm and most preferably between 0.5 and 2 nm. For the purposes of the invention, the first material is preferably selected from the group comprising: Cr, Ti, SiO, SiO₂, In₂O₃, SnO₂ and mixtures thereof. Among them, chromium is particularly preferred.

Preferably, the layer including the second material has a thickness comprised between 3 and 80 nm and most preferably between 8 and 50 nm. For the purposes of the invention, the second material is preferably selected from the group comprising: CrₓO_{y}, TiO₂, ZnSe, ZnS and mixtures thereof, wherein x is a number comprised between 1 and 2, and y is a number comprised between 1 and 3. Among them, Cr₂O₃ is particularly preferred.

According to a preferred embodiment, the second material has a refraction index comprised between 1.7 and 2.7. More preferably, the refraction index of the second material is comprised between 1.9 and 2.4.

In the present description, the refraction indexes of the different materials are intended as indexes measured at the wavelengths at which the respective materials are transparent or only weakly absorbent.

Preferably, the layer including the third material has a thickness comprised between 5 and 400 nm and most preferably between 10 and 200 nm. For the purposes of the invention, the third material is preferably selected from the group comprising: SiO, SiO₂, MgF₂, Na₅Al₃F₁₄, and mixtures thereof.

Preferably, the third material has a refraction index comprised between 1.32 and 1.8 and more preferably between 1.4 and 1.7.

Preferably, the substrate essentially consists of a transparent element of glass or plastics having a refraction index at 500 nm comprised between 1.38 and 1.75.

If the substrate is made of plastics, it may be coated with a polisiloxane resin or other suitable material having the double function of imparting scratch-proof properties to the finished product, and of increasing the adhesion degree of the mirroring coating to the same substrate.

For the purposes of the invention, the plastics is preferably selected from the group comprising: acrylic-based polymers and copolymers, polymethylmethacrylate, polycarbonate, polyol-allyl-carbonates, cellulose esters, polyacrylates, polystyrene, polyurethanes.

Among them, an acrylic-based copolymer commercially available as Spectralite™ (Sola Optical), diethylenglycol-bis-allyl-carbonate, commercially available as CR 39™ (PPG Industries Inc.), and polycarbonate, commonly used for manufacturing ophthalmic and non-ophthalmic lenses for glasses, are preferred.

Preferably, the optical element is manufactured in the shape of lens or visor for glasses, or in the shape of slab or protective shield.

According to a second aspect thereof, the present invention provides a method for forming on a transparent substrate of an optical element a superficial mirror coating, as is defined in the attached claim 13.

In a preferred embodiment of the method according to the invention, the superficial mirror coating of the substrate is formed by means of a process of physical vapor deposition carried out using the low-cost equipment and technologies usually employed in the manufacture of the two-layered superficial mirror coatings.

The Applicant has surprisingly noted that it is advantageously possible in this way to attain the desired improved adhesion properties at a cost comparable to that reached so far by the methods for forming two-layered mirroring coatings.

In fact, even by using the low-cost coating equipment and technologies usually employed in the manufacture of the two-layered superficial mirror coatings, the method of the present invention advantageously allows to improve the quality of mirroring, which is comparable to the quality of multi-layered coatings which are much more expensive and produced with sophisticated techniques, such as those based on the use of electronic guns, but at the same time to limit the costs, maintaining them comparable to those of two-layered coatings.

Moreover, this preferred manufacturing method of the present invention allows to increase the productivity with respect to the methods of the prior art employed for the manufacture of multi-layer coatings thanks to the reduced process time of this less sophisticated equipment.

The coating equipment of most preferred use comprises, in particular:
- a sealed chamber provided with an outer coil for heating/cooling the same,
- a dome serving as a support for the blanks of the optical element to be coated,
- a plurality of metallic crucibles suitably connected to a current source which is adapted to heat the crucibles by Joule effect and, along therewith, to heat the material to be deposited onto the substrate of the optical element housed therein,
- a vacuum system in fluid communication with the sealed chamber,
- an adjusting device for feeding optional reactive gases (for example oxygen) and a ion discharge device for cleaning the substrate to be coated.

According to a preferred embodiment, the crucibles are preferably made of molybdenum and are provided on top by a removable shutter which closes the crucibles until the material to be evaporated reaches the desired evaporation temperature.

Preferably, the substrate is positioned in a sealed chamber wherein a vacuum degree comprised between 2*10⁻⁵ e 1.5*10⁻⁴ mbar is reached.

In a preferred embodiment, the method of the invention provides for forming a metal adhesion layer on the substrate followed by depositing on this adhesion layer a reflection layer essentially consisting of an oxide of the same metal or, alternatively, of a different metal.

In the former case, it is preferable and advantageous to form the reflection layer by evaporating said metal in an oxygen-containing environment, so as to form the desired oxide layer "*in situ*", i.e., directly onto the underlying adhesion layer.

Preferably, the reflection layer is formed in this case by adjusting the deposition rate of the second material on the substrate in a range comprised between 0.05 and 0.15 nm/s.

In this way, it is advantageously possible to obtain an oxide layer having the desired stoichiometric ratio between metal and oxygen.

According to a preferred embodiment of the method of the invention, each deposition step of the first, second and third material is carried out by evaporation and is preceded by a pre-heating step of the respective material.

Conveniently, the pre-heating steps are adapted to bring each material to a pre-heating temperature close to that most suitable for effecting the evaporation and are carried out while maintaining the removable shutter of the crucibles in its closed position.

Preferably, both the pre-heating and evaporation steps are carried out by means of Joule effect so as to reach a temperature, which may easily determined by those skilled in the art, that allows to carry out the deposition at the desired rate.

According to a preferred embodiment, the pre-heating steps are carried out when the crucibles are made of molybdenum by feeding thereto a current having a value preferably comprised between 200 and 390 A.

Still more preferably, the current fed to the crucibles during the pre-heating steps has the following values:
i) of from 330 A and 370 A, most preferably equal to about 350 A, when pre-heating the first material;
ii) of from 360 A and 400 A, most preferably equal to about 380 A, when pre-heating the second material;
iii) of from 200 A and 240 A, most preferably equal to about 220 A, when pre-heating the third material.

According to a preferred embodiment, the evaporation steps are carried out when the crucibles are made of molybdenum by feeding thereto a current having a value preferably comprised between 280 and 400 A.

Still more preferably, the current fed to the crucibles during the evaporation steps has the following values:
i) of from 360 A and 400 A, most preferably equal to about 380 A, when evaporating the first material;
ii) of from 360 A and 400 A, most preferably equal to about 380 A, when evaporating the second material;
iii) of from 270 A and 310 A, most preferably equal to about 290 A, when evaporating the third material.

Advantageously, using the equipment briefly described hereinabove, it is possible to carry out the coating method of the invention in an overall time comprised between 15 and 35 minutes.

Preferably, said time is divided among the main operative steps as follows:
- vacuum time: 8 - 10 min;
- time for activating the surface of the substrate: 3 - 5 min;
- pre-heating time of the first material: about 180 s;
- deposition time of the first material: 2.5 - 10 s;
- pre-heating time of the second material: about 180 s;
- deposition time of the second material: 40 - 300 s;
- pre-heating time of the third material: about 180 s;
- deposition time of the third material: 7 - 300 s;
- time for restoring the ambient pressure: about 180 s.

In this preferred embodiment, thanks to the relatively low fixed cost of said equipment and to the reduced process times, it is possible to form a mirror coating on the optical element at a cost which is comparable, as a whole, to that of the optical elements provided with a two-layered coating of the prior art, obtaining at the same time the desired improvement of the properties of adhesion and of abrasion resistance of the coating.

In the alternative, it is clearly possible to carry out the method of the present invention by using more sophisticated equipment, such as those commonly employed for manufacturing multi-layered coatings, thus obtaining as good results in terms of mechanical resistance and of adhesion of the coating to the substrate, but to the detriment of the cost of the optical element thus produced, which in this case is much higher.

### Brief description of the drawing

Additional features and advantages of the invention will become more readily apparent from the following description of some preferred embodiments of the invention, given hereinbelow by way of non-limitative examples with reference to the accompanying drawing.

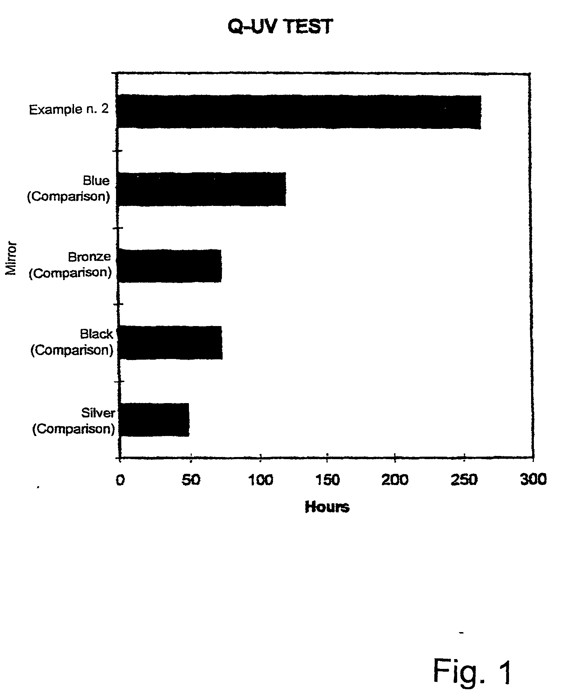

In the drawing, figure 1 illustrates, in the form of a histogram, the results of the Q-UV test for determining the adhesion properties of the coating to the support.

### EXAMPLE 1

On 100 lenses for glasses made of CR 39™ (PPG Industries Inc.), a mirror coating according to the invention was realized, comprising:
- an adhesion layer of Cr;
- a reflection layer of TiO₂ (refraction index = 2.25 at 500 nm) ;
- a coloring and abrasion-resistance layer of SiO₂ (refraction index = 1.47 at 500 nm).

The formation of the coating layers was carried out by means of a Satis 1200 DLS coater (Satis Vacuum AG), commercially available, equipped with an electronic gun having a 15 kW power supply, an ion gun having a 9.5 kW power supply and an oxygen flow regulator.

The adhesion layer of the coating was deposited by evaporating under vacuum metallic Cr after having activated the surface of the lens by ion discharge in oxygen environment for a period of time equal to 180 s.

The deposition parameters were the following:
- initial vacuum: 3·10⁻⁵ mbar;
- temperature at the beginning of the deposition*: 60°C;
- vacuum time: 20 min;
- time for activating the surface of the substrate by ion discharge: 180 s;
- pre-heating time of Cr: 180 s;
- deposition time of Cr: about 5 s;
- pre-heating time of TiO₂: 180 s;
- deposition time of TiO₂: about 120 s;
- pre-heating time of SiO₂: 180 s;
- deposition time of SiO₂: about 180 s;
- time for restoring the ambient pressure: 15 min.
* measured on the lens.

The TiO₂ layer was deposited by evaporating metallic Ti and introducing an O₂ flow equal to about 35 sccm (standard cubic centimetres per minute), whereas the final layer of SiO₂ was deposited in the absence of O₂.

At the end of the deposition operations, a mirror coating, having the characteristics illustrated in the following Table I, was obtained on each lens.

### EXAMPLE 2

On 100 lenses made of polycarbonate, a mirror coating according to the invention was realized, comprising:
- an adhesion layer of Cr;
- a reflection layer consisting of a non-stoichiometric chromium oxide of empirical formula CrₓO_{y}, wherein x is a number comprised between 1 and 2 and y is a number comprised between 1 and 3, having a refraction index comprised between 1.9 and 2.4 at 500 nm;
- a coloring and abrasion-resistance layer of SiO (refraction index = 1.7 at 500 nm).

The formation of the coating layers was carried out by means of a Satis 150/S coater (Satis Vacuum AG), commercially available, comprising a plurality of crucibles provided with electrical resistors adapted to heat the material by Joule effect.

The deposition parameters were the following:
- initial vacuum: 1.1·10⁻⁴ mbar;
- temperature at the beginning of the deposition*: 50°C;
- vacuum time: 10 min;
- time for activating the surface of the substrate by ion discharge: 180 s;
- pre-heating time of Cr: 180 s;
- deposition time of Cr: about 5 s;
- pre-heating time of Cr before deposition of CrₓO_{y}: 180 s;
- deposition time of CrₓO_{y}: about 45 s;
- pre-heating time of Si before deposition of SiO: 180 s;
- deposition time of SiO: about 150 s;
- time for restoring the ambient pressure: 180 s.
* measured on the lens.

The CrₓO_{y} layer was deposited by evaporating metallic Cr and introducing an O₂ flow equal to about 46 sccm, whereas the layer of SiO was deposited by evaporating Si and introducing an O₂ flow equal to about 32.8 sccm.

At the end of the deposition operations, a mirror coating, having the characteristics illustrated in the following Table II, was obtained on each lens.

### EXAMPLE 3

On 100 lenses made of polycarbonate, a mirror coating according to the invention was realized, comprising:
- an adhesion layer of SiO (refraction index = 1.7 at 500 nm);
- a reflection layer consisting of non-stoichiometric chromium oxide of empirical formula CrₓO_{y}, wherein x is a number comprised between 1 and 2 and y is a number comprised between 1 and 3, having a refraction index comprised between 1.9 and 2.4 at 500 nm;
- a coloring and abrasion-resistance layer of SiO (refraction index = 1.7 at 500 nm).

The formation of the layers of the coating was carried out by means of a Satis 150/S coater (Satis Vacuum AG).

The deposition parameters were the following:
- initial vacuum: 1,1.10⁻⁴ mbar;
- temperature at the beginning of the deposition*: 50°C;
- vacuum time: 10 min;
- time for activating the surface of the substrate by ion discharge: 180 s;
- pre-heating time of SiO: 180 s;
- deposition time of SiO: about 8 s;
- pre-heating time of Cr before deposition of CrₓO_{y}: 180 s;
- deposition time of CrₓO_{y}: about 55 s;
- pre-heating time of Si before deposition of SiO: 180 s;
- deposition time of SiO: about 10 s;
- time for restoring the ambient pressure: 180 s.
* measured on the lens.

The CrₓO_{y} layer was deposited by evaporating metallic Cr and introducing an O₂ flow equal to about 46 sccm, whereas the layer of SiO was deposited by evaporating Si and introducing an O₂ flow equal to about 32.8 sccm.

At the end of the deposition operations, a mirror coating, having the characteristics illustrated in the following Table III, was obtained on each lens.

### EXAMPLE 4

### (Determination of the adhesion properties of the coating)

The lenses of example 2 were subjected to a standard test for determining the adhesion properties of the coating.

In particular, the comparative test commonly known as Q-UV test was carried out on a set of lenses with the purpose of assessing the relative lifetime of the lenses examined in an outer environment.

Such a test, aims at simulating in laboratory the harmful effects exerted by the exposition to atmospheric agents in conformity with standards ASTM G53, D-4329, SAE J2020 and ISO 4892.

The results of the measures carried out, graphically represented in figure 1 in which the mean lifetime expressed in hours of the lenses of example 2 compared with the lifetimes of comparative lenses, is illustrated.

In the aforementioned figure, the bars labeled Blue, Bronze, Black and Silver are referred to polycarbonate lenses provided with a Cr- and SiO-based two-layered coating such as to impart to each of them the corresponding color; said lenses are commercially available with the respective technical denominations of Blue Mirror, Bronze Mirror, Black Mirror and Silver Mirror (Sola Optical Italia S.p.A.).

As it can be noted from the histogram reported in Fig. 1, the coating of the invention has significantly improved adhesion properties with respect to those of the two-layered coatings of known type.

### EXAMPLE 5

### (Determination of the abrasion resistance properties of the coating)

For the purpose of evaluating the abrasion resistance of the coating according to the previous Example 2 with respect to that of two-layered coatings of known type, another comparative test - known in the field with the name of Steel Wool test - was carried out.

Such a test is carried out by rubbing steel wool on the surface of the lens: the damage caused by the abrasion is evaluated in terms of increase of scratches on the lens.

The Steel Wool Test was carried out by means of a modified Sutherland ink-rub tester (James River Corp. - Kalamazoo, Michigan, U.S.A.), wherein the rubber pad was replaced by a flake of standard steel wool grade 000. The steel wool flake was subject to a 2-kg weight placed in oscillation for a predetermined number of abrasion cycles. The lenses were examined at the microscope and with the naked eye against an illuminated black panel after having been subject to 25 abrasion cycles.

The results, in terms of relative data, are reported in Table IV, and they fall within a range of values whose upper limit is defined by the abrasion resistance of glass, to which an evaluation equal to 5 stars is attributed, and whose lower limit corresponds to the abrasion resistance of uncoated polycarbonate, to which an evaluation equal to 0 stars is attributed.

From the comparison data reported in Table IV, it is possible to note that the plastics lenses of example 2 exhibit a higher resistance to abrasion with respect to that of the comparison lenses provided with a conventional two-layered coating, and just lower than that of the glass.

**TABLE I**

| layer | deposition rate [nm/s] | thickness [nm] | optical thickness at 500 nm [nm] |
|---|---|---|---|
| Cr | 0.1 | 0.50 | - |
| TiO₂ | 0.35 | 42.00 | 94.50 |
| SiO₂ | 0.96 | 173.11 | 254.47 |

**TABLE II**

| layer | deposition rate [nm/s] | thickness [nm] | optical thickness at 500 nm [nm] |
|---|---|---|---|
| Cr | 0.1 | 0.50 | - |
| CrₓO_{y} | 0.18 | 8.00 | 17.2* |
| SiO | 1.3 | 200.00 | 340.00 |

| | | | |
|---|---|---|---|
| * = value obtained considering a mean value of the refraction index equal to 2.15 | | | |

**TABLE III**

| layer | deposition rate [nm/s] | thickness [nm] | optical thickness at 500 nm [nm] |
|---|---|---|---|
| SiO | 0.5 | 4.00 | - |
| CrₓO_{y} | 0.18 | 10.00 | 21.5* |
| SiO | 0.5 | 5.00 | 8.5 |

| | | | |
|---|---|---|---|
| * = value obtained considering a mean value of the refraction index equal to 2.15 | | | |

**TABLE IV**

| | |
|---|---|
| Silver (comparison) | ** |
| Black (comparison) | ** |
| Bronze (comparison) | *** |
| Blue (comparison) | *** |
| Example 2 | **** |

## Claims

1. A substantially transparent optical element comprising a transparent substrate provided with a superficial mirror coating including a plurality of superimposed layers, wherein the coating comprises:
- an adhesion layer including a first material adapted to firmly adhere to said substrate;
- a reflection layer deposited onto said adhesion layer, including a second material having a high refraction index selected from the group comprising: CrₓO_{y}, TiO₂, ZnSe, ZnS and mixtures thereof, wherein x is a number comprised between 1 and 2 and y is a number comprised between 1 and 3;
- a coloring and optionally abrasion-resistance layer deposited onto said reflection layer, including a third material having a refraction index lower than the refraction index of said second material.

2. Optical element according to claim 1, **characterized in that** the layer including said first material has a thickness comprised between 0.5 and 2 nm.

3. Optical element according to claim 1, **characterized in that** the layer including said second material has a thickness comprised between 3 and 60 nm.

4. Optical element according to claim 1, **characterized in that** the layer including said third material has a thickness comprised between 10 and 400 nm.

5. Optical element according to claim 1, **characterized in that** said first material is selected from the group comprising: Cr, Ti, SiO, SiO₂, In₂O₃, SnO₂ and mixtures thereof.

6. Optical element according to claim 1, **characterized in that** said second material has a refraction index comprised between 1.7 and 2.7.

7. Optical element according to claim 1, **characterized in that** said third material has a refraction index comprised between 1.32 and 1.8.

8. Optical element according to claim 1, **characterized in that** said third material is selected from the group comprising: SiO, SiO₂, MgF₂, Na₅Al₃F₁₄, and mixtures thereof.

9. Optical element according to claim 1, **characterized in that** said transparent substrate essentially consists of glass or plastics having a refraction index at 500 nm comprised between 1.38 and 1.75.

10. Optical element according to claim 9, **characterized in that** said plastics is selected from the group comprising: acrylic-based polymers and copolymers, polymethylmethacrylate, polycarbonate, polyol-allyl-carbonates, cellulose esters, polyacrylates, polystyrene, polyurethanes.

11. Optical element according to anyone of the preceding claims, in the form of lens or visor for glasses.

12. Optical element according to anyone of claims 1-10, in the form of slab or protective shield.

13. Method for forming, on a transparent substrate of an optical element, a superficial mirror coating according to anyone of the preceding claims, comprising the steps of:
a) placing said substrate in a sealed chamber;
b) bringing said chamber to a predetermined vacuum degree;
c) activating the surface of said substrate by means of ion discharge in an oxygen-containing environment for a predetermined period of time;
d) depositing in substantial absence of oxygen said first material on the substrate so as to form an adhesion layer having a predetermined thickness;
e) depositing at a controlled rate, optionally in the presence of oxygen, said second material on said adhesion layer so as to form a reflection layer having a predetermined thickness;
f) depositing, optionally in the presence of oxygen, said third material having a refraction index lower than the refraction index of said second material on said reflection layer, so as to form a coloring and optionally abrasion-resistance layer having a predetermined thickness.

14. Method according to claim 13, wherein said steps d), e), f) are carried out by evaporating said first, second and third material by means of the Joule effect.

15. Method according to claim 14, wherein each of said steps d), e), f) is preceded by a step of pre-heating the materials to be evaporated at a predetermined temperature.

16. Method according to claim 13, wherein said step e) is carried out so as to have a deposition rate of said second material onto the substrate comprised between 0.05 and 0.15 nm/s.

## Patentansprüche

1. Ein im Wesentlichen durchsichtiges optisches Element mit einem durchsichtigen Substrat, das mit einer oberflächlichen Spiegelbeschichtung versehen ist, die eine Mehrzahl von übereinander liegenden Schichten aufweist, wobei die Beschichtung aufweist:
- eine Klebeschicht mit einem ersten Material, das darauf ausgerichtet ist, fest am Substrat zu kleben;
- eine Reflektionsschicht, die auf der Klebeschicht aufgebracht ist, mit einem zweiten Material mit einem hohen Brechungsindex, das aus der folgenden Gruppe ausgewählt ist: CrₓO_{y}, TiO₂, ZnSe, ZnS und Mischungen daraus, wobei x eine Zahl zwischen 1 und 2 ist und y eine Zahl zwischen 1 und 3 ist;
- eine färbende und optional abriebfeste Schicht, die auf der Reflektionsschicht aufgebracht ist, mit einem dritten Material mit einem geringeren Brechungsindex als das zweite Material.

2. Optisches Element nach Anspruch 1, **dadurch gekennzeichnet, dass** die Schicht mit dem ersten Material eine Dicke von zwischen 0.5 und 2 nm aufweist.

3. Optisches Element nach Anspruch 1, **dadurch gekennzeichnet, dass** die Schicht mit dem zweiten Material eine Dicke von zwischen 3 und 60 nm aufweist.

4. Optisches Element nach Anspruch 1, **dadurch gekennzeichnet, dass** die Schicht mit dem dritten Material eine Dicke von zwischen 10 und 400 nm aufweist.

5. Optisches Element nach Anspruch 1, **dadurch gekennzeichnet, dass** das erste Material aus der folgenden Gruppe ausgewählt ist: Cr, Ti, SiO, SiO₂, In₂O₃, SnO₂ und Mischungen daraus.

6. Optisches Element nach Anspruch 1, **dadurch gekennzeichnet, dass** das zweite Material einen Brechungsindex von zwischen 1.7 und 2.7 aufweist.

7. Optisches Element nach Anspruch 1, **dadurch gekennzeichnet, dass** das dritte Material einen Brechungsindex von zwischen 1.32 und 1.8 aufweist.

8. Optisches Element nach Anspruch 1, **dadurch gekennzeichnet, dass** das dritte Material aus der folgenden Gruppe ausgewählt ist: SiO, SiO₂, MgF₂, Na₅Al₃F₁₄ und Mischungen daraus.

9. Optisches Element nach Anspruch 1, **dadurch gekennzeichnet, dass** das durchsichtige Substrat im Wesentlichen aus Glas oder Kunststoff mit einem Brechungsindex bei 500 nm von zwischen 1.38 und 1.75 besteht.

10. Optisches Element nach Anspruch 9, **dadurch gekennzeichnet, dass** der Kunststoff aus der folgenden Gruppe ausgewählt ist: Acryl-basierte Polymere und Copolymere, Polymethylmethacrylat, Polycarbonat, Polyol-Allyl-Carbonate, Celluloseester, Polyacrylate, Polystyrol, Polyurethane.

11. Optisches Element nach einem der vorangehenden Ansprüche in Form einer Linse oder eines Blendschutzes für Brillen.

12. Optisches Element nach einem der Ansprüche 1 bis 10 in Form einer Scheibe oder eines Schutzschilds.

13. Verfahren zum Ausbilden einer oberflächlichen Spiegelbeschichtung auf einem durchsichtigen Substrat eines optischen Elements gemäß einem der vorangehenden Ansprüche, mit folgenden Schritten:
a) Anordnen des Substrats in einer dichten Kammer;
b) Erzeugen eines vorbestimmten Vakuums in der Kammer;
c) Aktivieren der Oberfläche des Substrats mittels lonenfreisetzung in einer sauerstoffhaltigen Umgebung über einen vorbestimmten Zeitraum;
d) Aufbringen des ersten Materials auf dem Substrat bei im Wesentlichen keinem Vorliegen von Sauerstoff, um eine Klebeschicht mit einer vorbestimmten Dicke zu bilden;
e) Aufbringen, optional bei Vorliegen von Sauerstoff, des zweiten Materials in einer geregelten Menge auf die Klebeschicht, um eine Reflektionsschicht mit einer vorbestimmten Dicke zu bilden.
f) Aufbringen, optional bei Vorliegen von Sauerstoff, des dritten Materials mit einem geringeren Brechungsindex als das zweite Material auf die Reflektionsschicht, um eine färbende und optional abriebfeste Schicht mit einer vorbestimmten Dicke zu bilden.

14. Verfahren nach Anspruch 13, wobei die Schritte d), e), f) durchgeführt werden, indem das erste, zweite und dritte Material mittels des Joule-Effekts verdampft wird.

15. Verfahren nach Anspruch 14, wobei jedem der Schritte d), e), f) ein Schritt des Vorheizens des jeweiligen Materials, das bei einer vorbestimmten Temperatur verdampft werden soll, vorangeht.

16. Verfahren nach Anspruch 13, wobei der Schritt e) derart ausgeführt wird, dass eine Abscheiderate des zweiten Materials auf dem Substrat von zwischen 0.05 und 0.15 nm/s erhalten wird.

## Revendications

1. Elément optique sensiblement transparent comprenant un substrat transparent équipé d'un revêtement superficiel réfléchissant comprenant une pluralité de couches superposées, dans lequel le revêtement comprend :
- une couche d'adhérence comprenant un premier matériau adapté pour adhérer fermement audit substrat ;
- une couche de réflexion déposée sur ladite couche d'adhérence, comprenant un deuxième matériau ayant un indice de réfraction élevé choisi dans le groupe comprenant : CrₓO_{y}, TiO₂, ZnSe, ZnS et les mélanges de ceux-ci, dans lesquels x est un nombre compris entre 1 et 2 et y est un nombre compris entre 1 et 3 ;
- une couche colorante et facultativement résistante à l'abrasion déposée sur ladite couche de réflexion, comprenant un troisième matériau ayant un indice de réfraction inférieur à l'indice de réfraction dudit deuxième matériau.

2. Elément optique selon la revendication 1, **caractérisé en ce que** la couche comprenant ledit premier matériau a une épaisseur comprise entre 0,5 et 2 nm.

3. Elément optique selon la revendication 1, **caractérisé en ce que** la couche comprenant ledit deuxième matériau a une épaisseur comprise entre 3 et 60 nm.

4. Elément optique selon la revendication 1, **caractérisé en ce que** la couche comprenant ledit troisième matériau a une épaisseur comprise entre 10 et 400 nm.

5. Elément optique selon la revendication 1, **caractérisé en ce que** ledit premier matériau est choisi dans le groupe comprenant : Cr, Ti, SiO, SiO₂, In₂O₃, SnO₂ et des mélanges de ceux-ci.

6. Elément optique selon la revendication 1, **caractérisé en ce que** ledit deuxième matériau a un indice de réfraction compris entre 1,7 et 2,7.

7. Elément optique selon la revendication 1, **caractérisé en ce que** ledit troisième matériau a un indice de réfraction compris entre 1,32 et 1,8.

8. Elément optique selon la revendication 1, **caractérisé en ce que** ledit troisième matériau est choisi dans le groupe comprenant : SiO, SiO₂, MgF₂, Na₅Al₃F₁₄ et les mélanges de ceux-ci.

9. Elément optique selon la revendication 1, **caractérisé en ce que** ledit substrat transparent est essentiellement constitué de verre ou de plastique ayant un indice de réfraction à 500 nm compris entre 1,38 et 1,75.

10. Elément optique selon la revendication 9, **caractérisé en ce que** ledit plastique est choisi dans le groupe comprenant : des polymères et des copolymères à base d'acrylique, du polyméthacrylate de méthyle, du polycarbonate, des carbonates de polyol et allyliques, des esters de cellulose, des polyacrylates, du polystyrène, des polyuréthanes.

11. Elément optique selon l'une quelconque des revendications précédentes, sous la forme d'un verre ou d'un écran pour lunettes.

12. Elément optique selon l'une quelconque des revendications 1 à 10, sous la forme d'une plaque ou d'un écran de protection.

13. Procédé pour former, sur un substrat transparent d'un élément optique, un revêtement superficiel réfléchissant selon l'une quelconque des revendications précédentes, comprenant les étapes consistant à :
a) placer ledit substrat dans une cavité hermétique ;
b) porter ladite cavité jusqu'à un degré de vide prédéterminé ;
c) activer la surface dudit substrat au moyen d'une décharge ionique dans un environnement contenant de l'oxygène pendant une période de temps prédéterminée ;
d) déposer en absence substantielle d'oxygène ledit premier matériau sur le substrat afin de former une couche d'adhérence ayant une épaisseur prédéterminée ;
e) déposer à un taux contrôlé, facultativement en présence d'oxygène, ledit deuxième matériau sur ladite couche d'adhérence afin de former une couche de réflexion ayant une épaisseur prédéterminée ;
f) déposer, facultativement en présence d'oxygène, ledit troisième matériau ayant un indice de réfraction inférieur à l'indice de réfraction dudit deuxième matériau sur ladite couche de réflexion, afin de former une couche colorante et facultativement résistante à l'abrasion ayant une épaisseur prédéterminée.

14. Procédé selon la revendication 13, dans lequel lesdites étapes d), e), f) sont réalisées en évaporant lesdits premier, deuxième et troisième matériaux au moyen de l'effet de Joule.

15. Procédé selon la revendication 14, dans lequel chacune des étapes d), e), f) est précédée par une étape consistant à préchauffer les matériaux devant être évaporés à une température prédéterminée.

16. Procédé selon la revendication 13, dans lequel ladite étape e) est réalisée de manière à avoir un taux de dépôt dudit deuxième matériau sur le substrat compris entre 0,05 et 0,15 nm/s.
